# EUROPEAN PATENT APPLICATION

(11) **EP 3 035 502 A1**
(43) Date of publication of application: **22.06.2016**
(21) Application number: 15003261.3
(22) Date of filing: 16.11.2015
(51) Int. Cl.: H02K 7/00, H02K 7/18

(54) **DRIVER APPARATUS OF VEHICLE**

(30) Priority: 17.11.2014 KR 20140159886; 20.04.2015 KR 20150055392
(71) Applicant: LG Electronics Inc., Seoul 07336 (KR)
(72) Inventor: LIM, Hokyoung, Seoul 07336 (KR); HAN, Seungdo, Seoul 07336 (KR); LIM, Junyoung, Seoul 07336 (KR)
(74) Representative: Beyer, Andreas

(57) **Abstract**

A driving apparatus of a vehicle includes an engine driven using energy obtained by combustion of fuel, and a driving motor directly connected to a crankshaft of the engine. The driving motor includes a rotor having the same rotation shaft as that of the crankshaft, and a stator coupled to the engine to be housed inside of the rotor to rotate the rotor. Therefore, fuel consumption can be improved and a structural design of an engine periphery of a hybrid vehicle can be diversified.

## Description

### CROSS-REFERENCE TO RELATED APPLICATION

This application claims the priority benefit of Korean Patent Application Nos. 10-2014-0159886 and 10-2015-0055392, filed on November 17, 2014, and April 20, 2015, respectively, in the Korean Intellectual Property Office, the entire disclosures of which are hereby incorporated by reference into the present application.

### BACKGROUND OF THE INVENTION

### Field of the Invention

The present invention relates to a driving apparatus of a vehicle, and more particularly, to a driving apparatus of a vehicle in which a motor that assists an engine is directly connected to a crankshaft of the engine.

### Description of the Related Art

In general, in a hybrid vehicle, an Idle Stop and Go (ISG) function repeatedly performs operations that turn off or turn on an engine, thereby improving fuel consumption. A vehicle having an ISG function improves fuel consumption by 5-15%.

A vehicle having an ISG function performs initial starting of an engine and converts from idle stop to idle go using an ISG motor that transfers power to a flywheel.

When restarting of an engine is required according to initial starting of an engine or conversion from idle stop to idle go, the ISG motor is driven by a battery current to return power to a flywheel, thereby starting the engine.

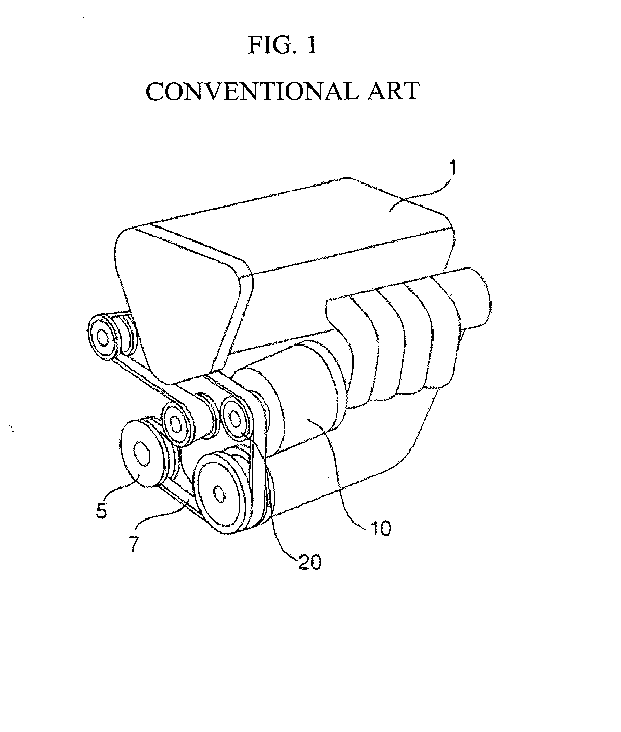

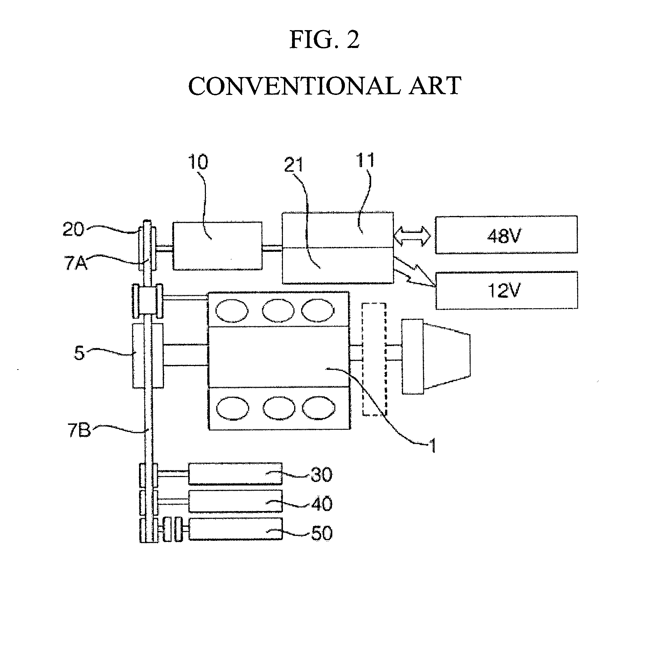

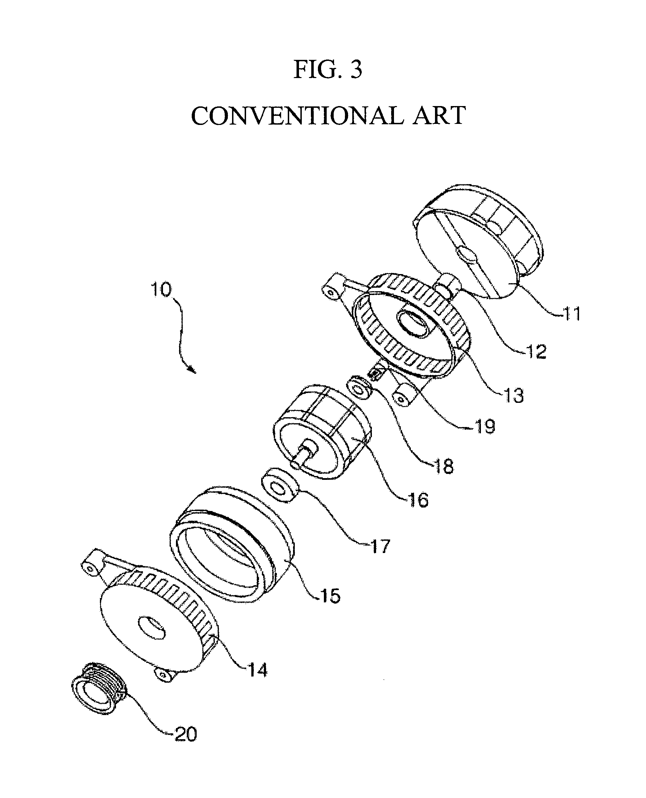

The ISG motor is classified into a B-ISG motor, which is an inner-rotor type motor connected to a flywheel by a belt, and a C-ISG motor, which is an outer-rotor type motor directly connected to a flywheel shaft according to an installation location. FIG. 1 is a perspective view illustrating a conventional B-ISG motor installed with an engine, FIG. 2 is a diagram illustrating a detailed configuration of FIG. 1, and FIG. 3 is an exploded perspective view illustrating the B-ISG motor of FIG. 1.

As shown in FIGS. 1 to 3, a conventional B-ISG motor 10 is an inner-rotor type motor and includes an inverter 11, a brush 12, a rear case 13 and a front case 14 having a predetermined space therein, a stator 15 fixed within the predetermined space, a rotor assembly 16 provided to rotate within the stator 15, a front bearing 17 and a rear bearing 18 coupled to a front end shaft portion and a rear end shaft portion, respectively, of the rotor assembly 16, a slip-ring 19 interposed between the brush 12 and the rotor assembly 16, and a motor pulley 20 connected to a front end shaft portion of the rotor assembly 16.

As shown in FIG. 2, in the B-ISG motor 10, a driving belt 7 is connected between the motor pulley 20 and a flywheel 5 provided to a crankshaft of an engine 1 to transfer power.

However, as shown in FIGS. 1 to 3, it is difficult for the conventional B-ISG motor 10 to adjust a torque output value. There is a method of increasing a size of the B-ISG motor 10 in order to generate a high torque, but in this case, a peripheral portion of the engine 1 is frequently broken. In addition, power transfer is provided through the driving belt 7, and thus the flywheel 5 and the motor pulley 20 should be designed to have a predetermined pulley ratio (pulley: motor pulley = 2.5:1), and thus a high speed operation is required. Also, due to a belt loss of the driving belt 7, there is a drawback that only a fuel consumption effect of 5% is obtained with a New European Driving Cycle (NEDC).

For reference, as shown in FIG. 2, in the conventional B-ISG motor 10, the inverter 11 for controlling a motor and a converter (LDC) 21 for supplying 12V power are connected, and as described above, in order to transfer power by the driving belt 7, a belt portion 7A is connected to the flywheel 5 of the engine 1. Further, in some cases, power output from the engine 1 is transferred by a belt portion 7B to be used as a power source that drives a water pump 30 or a power steering pump 40 and a compressor 50 of an air conditioner.

### SUMMARY OF THE INVENTION

The present invention has been made in view of the above problems, and provides a driving apparatus of a vehicle directly connected to a crankshaft of an engine and that simultaneously performs a function of a driving pulley for belt connection to a water pump, a power steering pump, and a compressor of an air conditioner, thereby improving fuel consumption and being formed in a small size.

In accordance with an aspect of the present invention, a driving apparatus of a vehicle includes an engine driven using energy obtained by combustion of fuel, and a driving motor directly connected to a crankshaft of the engine and including a rotor having the same rotation shaft as that of the crankshaft and a stator coupled to the engine to be housed inside of the rotor to rotate the rotor.

An outer circumference of the rotor may be formed in a pulley shape on which a driving belt is wound.

The rotor cover may form an inner space so as to have a ' 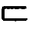 '-shaped cross-section opened to the engine side, and the stator may be housed at the inner space.

The driving apparatus may further include one or more of a water pump, a power steering pump, and a compressor of an air conditioner that receive a driving force of the driving belt.

The rotor may include a rotor cover coupled to the front end of the crankshaft of the engine to shield the outside of the crankshaft of the engine, and a pulley portion extended from a circumferential edge of the rotor cover to the engine side to wind a driving belt while forming an inner space that houses the stator.

The rotor cover and the pulley portion may be integrally formed.

A plurality of magnets may be fixed to an inner side surface of the pulley portion and may be fixed to have different adjacent polarity.

The pulley portion may be formed in a groove shape that houses a portion of the driving belt, when the driving belt is wound thereon.

The driving motor may be an Interior Permanent Magnet motor (IPM).

The driving motor may be a Wound Rotor Synchronous Motor (WRSM).

The driving motor may be driven in an electric vehicle mode (EV mode) using only power of the driving motor, a Hybrid Electric Vehicle mode (HEV mode) using rotary power of the driving motor as auxiliary power while using rotary power of the engine as main power, and a Regenerative Braking mode (RB mode) that recovers braking and inertia energy of the vehicle through power generation by the driving motor to charge the battery upon braking of the vehicle or driving by inertia of the vehicle.

According to a driving apparatus of a vehicle of the present invention, the following various effects can be obtained.

First, because a motor is provided to be directly connected to a crankshaft of an engine, a belt loss by belt driving is reduced and thus fuel consumption can be improved.

Second, because a water pump, a power steering pump, and a compressor of an air conditioner that receive power of an engine with a belt are provided as a driving pulley, a product can be formed in a compact size.

Third, by deleting a dual tensioner, a cost can be reduced.

Fourth, the driving motor is generally applicable to a wide variety of engines and engine compartments of a vehicle, so that changes to an existing engine configuration are easily accommodated.

### BRIEF DESCRIPTION OF THE DRAWINGS

The objects, features and advantages of the present invention will be more apparent from the following detailed description in conjunction with the accompanying drawings, in which:
- FIG. 1: is a perspective view illustrating a conventional B-ISG motor installed with an engine;
- FIG. 2: is a diagram illustrating a detailed configuration of FIG. 1;
- FIG. 3: is an exploded perspective view illustrating the B-ISG motor of FIG. 1;
- FIG. 4: is a perspective view illustrating a driving apparatus of a vehicle according to an exemplary embodiment of the present invention;
- FIG. 5: is a diagram illustrating a detailed configuration of FIG. 4; and
- FIG. 6: is an exploded perspective view illustrating the driving apparatus of FIG. 4.

### DETAILED DESCRIPTION OF EXEMPLARY EMBODIMENTS

Hereinafter, a driving apparatus of a vehicle according to an exemplary embodiment of the present invention will be described in detail with reference to the accompanying drawings.

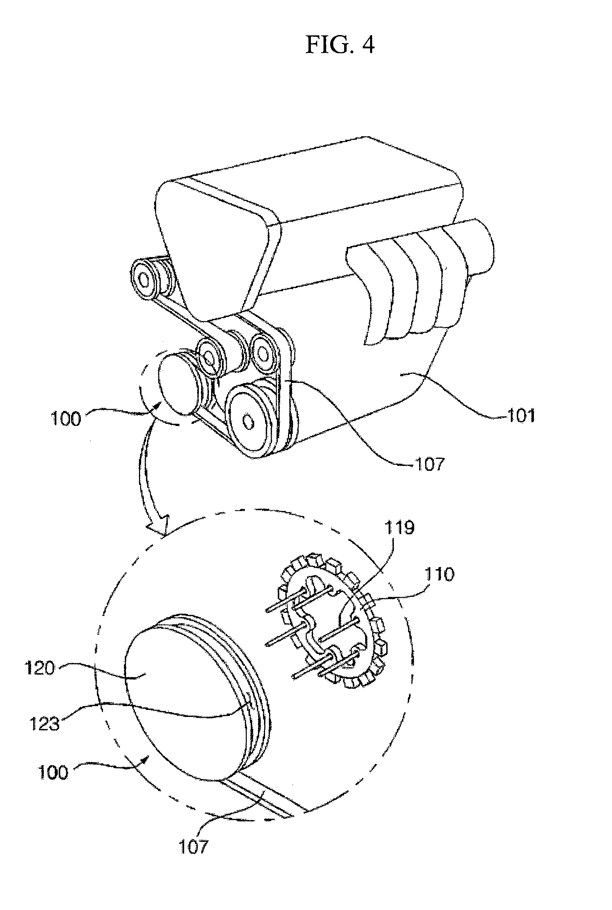

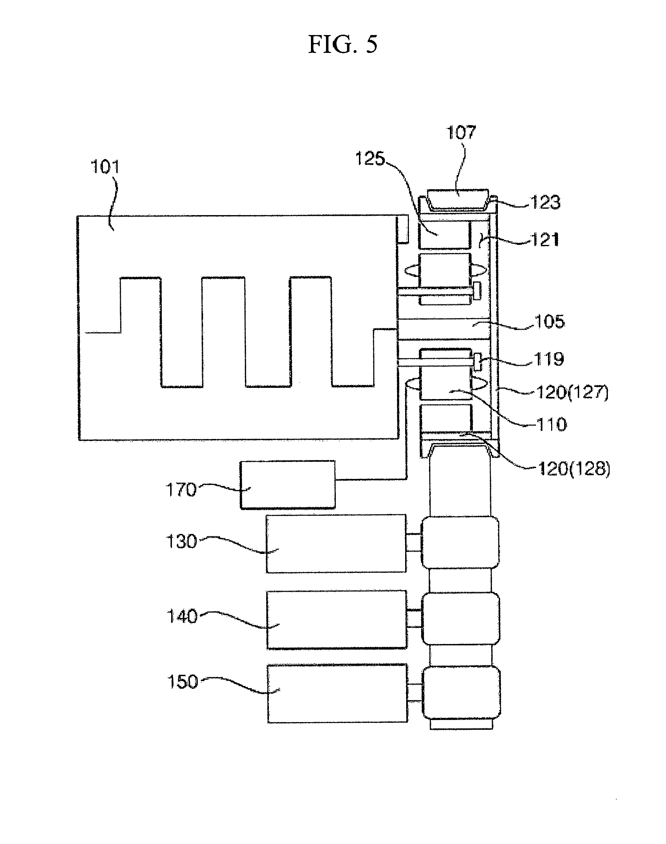

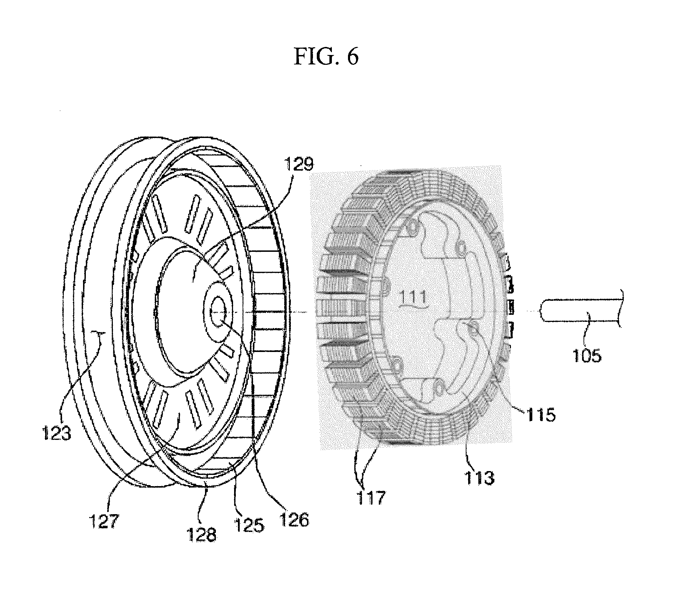

FIG. 4 is a perspective view illustrating a driving apparatus of a vehicle according to an exemplary embodiment of the present invention, FIG. 5 is a diagram illustrating a detailed configuration of FIG. 4, and FIG. 6 is an exploded perspective view illustrating the driving apparatus of FIG. 4.

As shown in FIGS. 4 to 6, a driving apparatus of a vehicle according to the present exemplary embodiment includes an engine 101 driven using energy obtained by combustion of fuel and a driving motor 100 that provides initial starting power as a starting motor of the engine 101.

A hybrid vehicle enables most efficient fuel consumption by together using the engine 101 and the driving motor 100 driven with battery power, thereby improving economic efficiency.

Although not shown in the drawings, the hybrid vehicle may include a Hybrid Control Unit (HCU) that controls an entire operation of the vehicle, an Engine Control Unit (ECU) that controls operation of the engine 101, a Transmission Control Unit (TCU) that controls operation of a transmission, and a Battery Control Unit (BCU) that controls and manages a battery. Control of the driving motor 100 is performed through an inverter 170.

Here, because the driving motor 100 performs both functions of a starter and a generator, the driving motor 100 is referred to as an Integrated Starter & Generator (ISG) or a Hybrid Starter & Generator (HSG).

The hybrid vehicle having such as configuration is driven in a driving mode such as an Electric Vehicle mode (EV mode), which is a pure electric vehicle mode using only power of the driving motor 100, a Hybrid Electric Vehicle mode (HEV mode) using rotary power of the driving motor 100 as auxiliary power while using rotary power of the engine 101 as main power, and a Regenerative Braking mode (RB mode) that recovers braking and inertia energy of the vehicle through power generation by the driving motor 100 and that charges the battery upon braking of the vehicle or upon driving by inertia of the vehicle, thereby having more efficient fuel consumption.

The driving apparatus of a vehicle according to an exemplary embodiment of the present invention enables a conventional power transfer configuration between the driving motor 100 and the engine 101 to deviate from a belt power transfer method, thereby innovatively improving fuel consumption.

For this reason, the driving motor 100 includes a rotor 120 directly connected to a crankshaft 105 of the engine 101 and having the same rotation shaft as that of the crankshaft 105, and a stator 110 coupled to the engine 101 so as to be housed at the inside of the rotor 120 to rotate the rotor 120.

That is, in a conventional belt driving method, a predetermined space for installing the driving motor 10 is provided at one side of the engine 1, the driving motor 10 is installed at the predetermined space, and power is transferred by a belt connecting a flywheel 5 provided to a crankshaft of the engine 1 and the motor pulley 20 provided to a rotation shaft of the driving motor 10; however, in an exemplary embodiment of the present invention, the driving motor 100 formed with an outer-rotor type rotor is mounted at a space in which the flywheel 5 is mounted without the necessity of providing a space for installation of a separate driving motor 100, and the rotor 120 is provided to be directly coupled (connected) to the crankshaft 105.

In a driving apparatus of a vehicle according to an exemplary embodiment of the present invention, by directly connecting the driving motor 100 to the crankshaft 105 of the engine 101, a restriction of an installation space that has been conventionally separately required for installation of the driving motor 100 is removed, and thus a freedom degree of a design of the engine 101 and a peripheral configuration of the engine 101 can be improved. Further, because a belt loss that has been a problem in a conventional belt power transfer method is removed, fuel consumption can be improved.

Particularly, because a motor pulley 20, which was an indispensable component in a belt power transfer method, is removed, a motor size can increase. Therefore, the driving motor 100 may operate with the same rotation velocity as that of the crankshaft 105 of the engine 101, and fuel consumption can be improved more by 2% compared to a belt power transfer method. Further, because the vehicle adapts a method in which the driving motor 100 is directly connected to the crankshaft 105, it is unnecessary that the vehicle has motor bearings and thus due to reduction of the component number, a cost reduction effect can be obtained.

In a driving apparatus of a vehicle according to an exemplary embodiment of the present invention, as shown in FIG. 5, a water pump 130, a power steering pump 140, and a compressor 150 of the air conditioner may be driven by a driving force output from the engine 101 or a driving force output from the driving motor 100.

In order to prevent the engine 101 from being overheated, the water pump 130 performs a function of forcibly circulating coolant, the power steering pump 140 performs a function of forcibly discharging oil to a power steering column, and the compressor 150 of the air conditioner performs a function of compressing a refrigerant that circulates in a refrigerant pipe while completing a thermodynamic cycle.

Power output from the conventional engine 1 was transferred with the motor pulley 20 of the driving motor 10 and a driving belt 7A to one of a plurality of pulleys (including a flywheel) provided in a multistage arrangement to a crankshaft and was transferred to a separate driving belt 7B with the water pump 30, the power steering pump 40, and the compressor 50 of the air conditioner in the remaining pulleys of the plurality of pulleys; however, in a driving apparatus of a vehicle according to an exemplary embodiment of the present invention, because an outer circumference of the rotor 120 is formed in a shape in which a driving belt 107 is wound, the water pump 130, the power steering pump 140, and the compressor 150 of an air conditioner and an outer circumference of the rotor 120 are connected by the driving belt 107.

In more detail, as shown in FIGS. 5 and 6, the rotor 120 may include a rotor cover 127 coupled to the front end of the crankshaft 105 of the engine 101 to shield the outside of the crankshaft 105 of the engine 101, and a pulley portion 128 extended to the engine 101 side at a circumferential edge of the rotor cover 127 to form an inner space 121 that houses the stator 110 and that winds the driving belt 107.

As described above, the rotor cover 127 and the pulley portion 128 have different functions, but in a production process, the rotor cover 127 and the pulley portion 128 may be integrally formed.

The rotor cover 127 is formed to have a ' 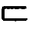 ' shaped cross-section approximately opened to the engine 101 side, and at the inner space 121, the stator 110 fixed to the engine 101 may be housed.

At the inner space 121, which is the inside of the rotor cover 127, a crankshaft coupling hole 126 is formed for insertion coupling of the front end of the crankshaft 105, and the inner space 121 includes a connecting portion 129 that connects the crankshaft 105 and the rotor 120.

As shown in FIG. 6, the stator 110 may include a body 113 in which an opening portion 111 is formed in a circular ring shape, a mounting portion 115 protruded to the opening portion 111 side of the body 113 to fix a bolt 119 to a periphery of the crankshaft 105 of the engine 101, and a plurality of field magnets 117 continuously disposed along an outer circumference of the body 113. The field magnet 117 may be implemented in three phases, but the field magnet 117 is preferably implemented in five phases.

Further, at an inner side surface of the pulley portion 128, a plurality of magnets 125 are continuously arranged and fixed to have different adjacent polarity. A groove-shaped winding portion 123 is formed at an outer side surface of the pulley portion 128, as described above, in order to wind the driving belt 107 that connects the water pump 130, the power steering pump 140, and the compressor 150 of the air conditioner.

As shown in FIG. 6, the driving motor 100 may be provided as an Interior Permanent Magnet motor (IPM). Because the IPM has a strong mechanical property and derives a reluctance torque due to saliency, the IPM is a motor appropriate to a hybrid vehicle.

However, it is not required that the driving motor 100 be provided as an IPM. In the IPM, a strong magnetic flux for obtaining a large torque in a low speed range may be represented with a voltage limitation in a high speed range; therefore, a Wound Rotor Synchronous Motor (WRSM) that introduces a winding in a field magnet in order to directly control a field magnet magnetic flux may be provided.

An operation process of a driving apparatus of a vehicle according to an exemplary embodiment of the present invention having the foregoing configuration will be simply described on a control mode basis as follows.

First, when the vehicle operates in an EV mode, in a state in which the engine 101 is stopped, the vehicle receives the supply of power from a battery and thus the driving motor 100 rotates to rotate the crankshaft 105 of the engine 101, and as the crankshaft 105 of the engine 101 rotates, the vehicle may be driven. Power transfer from the crankshaft 105 to a wheel of the vehicle follows a general power transfer method. In this case, the rotor 120 rotates the crankshaft 105 while rotating about the stator 110 fixed to the engine 101.

When the vehicle operates in an HEV mode, if the engine 101 generally drives, in order to save fuel, the vehicle is controlled to improve fuel consumption by driving the driving motor 100 in order to operate a driving unit (the water pump 130, the power steering pump 140, and the compressor 150 of the air conditioner) regardless of driving of the vehicle or by participating in initial starting of the engine 101 in a state in which the engine 101 temporarily stops, and the HEV mode is one of the driving modes.

Even when the vehicle operates in an HEV mode, the rotor receives the supply of power from a battery and thus the rotor 120 initially starts the engine 101 by forcibly rotating the crankshaft 105 while rotating about the stator 110 or in a state in which power is blocked from the crankshaft 105 in a direction of the engine 101 by a clutch, for example, the vehicle transfers power so as to operate the water pump 130, the power steering pump 140, and the compressor 150 of the air conditioner.

When the vehicle operates in an RB mode, upon driving the engine 101, while the rotor 120 directly connected to the crankshaft 105 of the engine 101 rotates about the stator 110, the rotor 120 converts a rotation movement to electric energy and charges the battery.

While the present invention has been particularly shown and described with reference to exemplary embodiments thereof, it will be understood by those skilled in the art that various changes in form and details may be made therein without departing from the spirit and scope of the invention as defined by the appended claims. Therefore, the scope of the present invention is determined by claims to be described later.

## Claims

1. A driving apparatus of a vehicle, the driving apparatus comprising:
an engine configured to be driven using energy obtained by combustion of fuel, the engine including a crankshaft; and
a driving motor directly connected to the crankshaft of the engine, the driving motor comprising
a rotor having a same rotation shaft as that of the crankshaft; and
a stator configured to rotate the rotor, the stator being located inside of the rotor and coupled to the engine.

2. The driving apparatus of claim 1, wherein an outer circumference of the rotor is formed in a pulley shape in which a drive belt is woundable thereon.

3. The driving apparatus of claim 1 or 2, further comprising:
at least one of a water pump, a power steering pump, and a compressor of an air conditioner; and
a drive belt to transfer a driving force of the pulley to the at least one of the water pump, the power steering pump, and the compressor.

4. The driving apparatus of one of claims 1 to 3, wherein the rotor comprises:
a rotor cover coupled to an end of the crankshaft; and
a pulley portion extended from a circumferential edge of the rotor cover toward the engine to receive a drive belt.

5. The driving apparatus of claim 4, wherein the rotor cover and the pulley portion are integrally formed.

6. The driving apparatus of claim 4 or 5, wherein the rotor cover forms an inner space having a ' 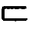 '-shaped cross-section opened toward the engine, and
wherein the stator is located at the inner space.

7. The driving apparatus of one of claims 4 to 6, further comprising a plurality of magnets fixed to an inner side surface of the pulley portion,
wherein adjacent ones of the magnets have different polarity.

8. The driving apparatus of one of claims 4 to 7, wherein the pulley portion has a groove that receives a portion of the drive belt therein.

9. The driving apparatus of one of the preceding claims, wherein the driving motor is an Interior Permanent Magnet motor (IPM).

10. The driving apparatus of one of claims 1 to 8, wherein the driving motor is a Wound Rotor Synchronous Motor (WRSM).

11. The driving apparatus of one of the preceding claims, wherein the driving motor is configured to be driven in an electric vehicle mode (EV mode) using only power of the driving motor, a Hybrid Electric Vehicle mode (HEV mode) using rotary power of the driving motor as auxiliary power while using rotary power of the engine as main power, and a Regenerative Braking mode (RB mode) that recovers braking and inertia energy through power generation by the driving motor to charge the battery upon braking of the vehicle or driving by inertia of the vehicle.

12. A driving apparatus of one of the preceding claims, wherein the rotor further comprises a crankshaft connecting portion for connection of the rotor to the crankshaft.

13. The driving motor of claim 12, wherein the crankshaft connecting portion comprises a crankshaft coupling hole into which the crankshaft is insertable for connection of the rotor to the crankshaft.

14. The driving motor of claim 12 or 13, wherein the stator comprises a mounting portion for fixing the stator to the engine.
